# EUROPÄISCHE PATENTSCHRIFT

(11) **EP 2 901 541 B1**
(45) Veröffentlichungstag und Bekanntmachung des Hinweises auf die Patenterteilung: **09.10.2019**
(21) Anmeldenummer: 13756825.9
(22) Anmeldetag: 28.08.2013
(51) Int. Cl.: H02K 3/26, H02K 21/26, H02K 29/00

(54) **ELEKTROMOTOR**
ELECTRIC MOTOR
MOTEUR ÉLECTRIQUE

(30) Priorität: 26.09.2012 DE 102012018888
(43) Veröffentlichungstag der Anmeldung: 05.08.2015
(73) Patentinhaber: SEW-EURODRIVE GmbH & Co. KG, 76646 Bruchsal (DE)
(72) Erfinder: SCHMIDT, Josef, 76676 Graben-Neudorf (DE); SIMON, Olaf, 76646 Bruchsal (DE); SCHUMANN, Christian, 66892 Bruchmühlbach-Miesau (DE); STEIN, Edgar, 66892 Bruchmühlbach-Miesau (DE)
(86) Internationale Anmeldenummer: PCT/EP2013/002591
(87) Internationale Veröffentlichungsnummer: WO 2014/048534

(56) Entgegenhaltungen:
- EP-A2- 0 374 805
- WO-A1-2006/122523
- DE-B- 1 292 237
- US-A- 3 534 469
- "Prospects for the printed motor", ENGINEERING,, Bd. 215, Nr. 3, 1. März 1975 (1975-03-01), Seiten 199-202, XP001448958,

## Beschreibung

Die Erfindung betrifft einen Elektromotor.

Es ist allgemein bekannt, dass ein Gleichstrommotor einen mechanisch betriebenen Kommutator benötigt. Der Rotor weist eine Wicklung auf.

Bei Synchronmotoren ist bekannt, auf dem Rotor Dauermagnete vorzusehen, die üblicherweise einen magnetischen Rückschluss aufweisen, also zur Schaffung des Rückschlusses ein Blechpaket am Rotor vorgesehen ist. Der Rotor ist somit nicht eisenlos.

Aus der WO 2006 / 122523 A1 ist ein Flachmotor zum Antrieb einer Verstelleinrichtung eines Kraftfahrzeugs bekannt.

Aus der Veröffentlichung "Prospects for the printed motor". ENGNEERING, Bd. 215, Nr. 3, 1. März 1975, Seiten 199 - 202 ist ein eine als Aktivteil verwendete Leiterplatte umfassender Elektromotor bekannt.

Aus der EP 0 374 805 A2 ist ein elektronisch kommutierter Synchronmotorantrieb bekannt.

Aus der US 3 534 469 A ist ein Herstellverfahren für einen Scheibenläufermotor bekannt.

Aus der DE 12 92 237 A ist ein kollektorloser Motor mit Gleichfeldpolen bekannt.

Der Erfindung liegt daher die Aufgabe zugrunde, einen Elektromotor weiterzubilden.

Erfindungsgemäß wird die Aufgabe bei dem Elektromotor nach den in Anspruch 1 angegebenen Merkmalen gelöst.

Wichtige Merkmale der Erfindung bei dem Elektromotor sind, dass er einen Stator und einen relativ zum Stator drehbar angeordneten Rotor aufweist,
wobei der Rotor einen Aktivbereich aufweist, insbesondere zur Drehmomenterzeugung bei Wechselwirkung des Aktivbereichs mit dem vom Stator erzeugten Magnetfeld,
wobei der Aktivbereich elektrisch bestrombare Leiterbahnen einer Multilayer-Leiterplatte, insbesondere also einer mehrlagigen Leiterplatte, aufweist.

Von Vorteil ist dabei, dass ein eisenloser Scheibenläufermotor als Drehfeldmaschine ausführbar ist, wobei eine mehrsträngige Rotorwicklung des erfindungsgemäßen Elektromotors als Drehstromwicklung in Form einer eisenlosen Luftspaltwicklung ausführbar ist, die als Leiterbahnen einer Leiterplatte ausführbar ist. Somit muss bei der Herstellung keine Wicklung gewickelt werden sondern nur eine Leiterplatte mit entsprechenden Leiterbahnen versehen werden. Die aufwendige Herstellung von gewickelten Rotoren entfällt somit. Durch den mehrlagigen Aufbau der Leiterplatte ist auch ein komplexes Wicklungsschema in einfacher Weise realisierbar. Ein mechanischer Kommutator ist verzichtbar. Der Stator ist entweder mittels Dauermagneten permanenterregt oder er weist eine Statorwicklung auf, so dass er elektrisch erregbar ist.

Durch die erfindungsgemäße eisenlose Luftspaltwicklung existieren außerdem keine magnetischen Vorzugsstellungen über dem Verdrehwinkel des Rotors relativ zum Stator. Insbesondere rastet der Rotor nicht, wie bei gewöhnlichen Synchronmaschinen. Daher ist ein sehr gleichförmiger Rundlauf erreichbar. Außerdem sind Eisenverluste im Rotor der Maschine vermeidbar.

Bei einer vorteilhaften Ausgestaltung ist die Leiterplatte drehfest mit dem Rotor verbunden,
insbesondere wobei die Leiterplatte drehfest mit einem Wellenabschnitt des Rotors verbunden ist,
insbesondere wobei der Rotor über Lager gelagert ist, die in einem Teil, insbesondere Gehäuseteil, aufgenommen sind, welches fest mit dem Stator, insbesondere den Statorkernen, verbunden sind. Von Vorteil ist dabei, dass zur Herstellung des Rotors nur eine Leiterplatte herzustellen ist, die mit dem Rotor verbunden ist, insbesondere bei der Fertigung beispielsweise aufgesteckt wird.

Bei einer vorteilhaften Ausgestaltung bilden die Leiterbahnen der Multilayer-Leiterplatte eine Drehfeldwicklung. Von Vorteil ist dabei, dass das Layout der Leiterplatte derart ausführbar ist, dass eine Drehfeldwicklung realisierbar ist.

Bei einer vorteilhaften Ausgestaltung weist der Stator Dauermagnete auf, insbesondere deren Magnetisierungsrichtung jeweils parallel zur Drehachse des Rotors ausgerichtet sind, insbesondere axial ausgerichtet sind. Von Vorteil ist dabei, dass der Stator ohne großen Aufwand herstellbar und betreibbar ist. Insbesondere ist keine Bestromung des Stators notwendig, da die Dauermagnete ein axial gerichtetes Magnetfeld erzeugen.

Bei einer vorteilhaften Ausgestaltung weist der Stator eine Statorwicklung auf zur Erzeugung eines Drehfeldes, insbesondere wobei die Statorwicklung eine Drehfeldwicklung ist. Von Vorteil ist dabei, dass durch die geeignete Bestromung der Statorwicklung mit einem Wechselstrom, insbesondere mit einem mehrphasigen Wechselstrom, ein Drehfeld erzeugbar ist.

Bei einer vorteilhaften Ausgestaltung verlaufen die im Aktivbereich angeordneten Leiterbahnen radial und/oder erstrecken sich radial. Von Vorteil ist dabei, dass das vom Stator erzeugte Magnetfeld axial gerichtet sein darf, um einen hohen Wirkungsgrad bei der Drehmomenterzeugung erreichbar zu machen.

Bei einer vorteilhaften Ausgestaltung schließt sich an den Aktivbereich radial innen und radial außen jeweils ein Umlenkbereich an,
insbesondere wobei die Leiterbahnen einer jeweiligen Lage in einem Umlenkbereich jeweils enden in einer axial gerichteten Durchkontaktierung, insbesondere axial gerichteten durchkontaktierten Bohrung der Leiterplatte, insbesondere zur elektrischen Verbindung von Leiterbahnen verschiedener Lagen. Von Vorteil ist dabei, dass die Durchkontaktierungen und der Umlenkbereich radial außerhalb oder innerhalb, also radial angrenzend oder beabstandet, von dem Hauptfeld des von der Statorwicklung erzeugten Magnetfeldes angeordnet sind.

Es ist außerdem möglich auf die Durchkontaktierungen zu verzichten, falls pro Lage nur ein Strang ausgeführt wird.

Bei einer vorteilhaften Ausgestaltung weist der Stator einen oder zwei sich axial gegenüber stehende Statorkerne auf. Von Vorteil ist dabei, dass ein geringes Streufeld erreichbar ist, indem die zahnartigen Vorsprünge aufeinander zu ausgerichtet angeordnet sind, also ein möglichst geringer Luftspalt zwischen den jeweils sich gegenüberstehenden zahnartigen Vorsprüngen vorhanden ist.

Bei einer vorteilhaften Ausgestaltung sind am Statorkern zahnartige Vorsprünge ausgebildet, die in Umfangsrichtung voneinander regelmäßig beabstandet sind, insbesondere und auf gleichem Radialabstand angeordnet sind,
wobei die Statorwicklung Einzelwicklungen aufweist, insbesondere aus Einzelwicklungen gebildet ist,
wobei jede Einzelwicklung auf einem jeweiligen zahnartigen Vorsprung aufgesteckt angeordnet ist,
insbesondere wobei das aus den Einzelwicklungen erzeugte Magnetfeld im Wesentlichen axial gerichtet ist,
insbesondere wobei das aus den Einzelwicklungen erzeugte Hauptfeld des Magnetfelds axial gerichtet ist. Von Vorteil ist dabei, dass eine Statorwicklung in einfacher Weise aus aufgesteckten Einzelzahnwicklungen zusammensetzbar ist. Somit sind einander sich gleichende Einzelzahnwicklungen aus einem Lager verwendbar.

Bei einer vorteilhaften Ausgestaltung ist der jeweilige Statorkern topfartig ausgeformt, wobei die zahnartigen Vorsprünge am Topfrand angeordnet sind,
insbesondere wobei der Statorkern jeweils aus SMC Material gefertigt ist. Von Vorteil ist dabei, dass das Magnetfeld, insbesondere der Hauptfeldanteil, geschlossen in zwei sich axial gegenüberstehenden, zueinander spiegelsymmetrisch zu einer zwischen den beiden Statorkernen angeordneten Ebene angeordneten Statorkerne führbar ist mit Ausnahme des Luftspalts zwischen den beiden Statorkernen.

Bei Dauermagneterregung ist die Ausführung des Stators auch aus Eisen oder Stahl möglich. SMC wird nur bei elektrischer Erregung verwendet, da sich die Richtung des magnetischen Flusses ändert und in massivem Stahl sehr große Wirbelströme, also auch Verluste, auftreten würden.

Bei einer vorteilhaften Ausgestaltung weist die Leiterplatte einen kreisförmigen radialen Außenrand auf. Von Vorteil ist dabei, dass keine Unwucht von der Leiterplatte verursacht wird.

Bei einer vorteilhaften Ausgestaltung sind die Leiterbahnen aus Kupfer oder einem Kupferhaltigem Werkstoff und/oder sind die Leiterbahnen der inneren Lagen der Leiterplatte in einem elektrisch isolierenden Trägermaterial eingebettet, insbesondere wobei das Trägermaterial zumindest Epoxidharz aufweist. Von Vorteil ist dabei, dass eine einfache Fertigung, insbesondere auch eine Massenfertigung, ausführbar ist.

Bei einer vorteilhaften Ausgestaltung ist die Leiterplatte mit elektronischen Bauteilen einer elektronischen Schaltung bestückt, insbesondere auf kleinerem Radialabstand als der Aktivbereich und/oder als die Umlenkbereiche angeordnet sind. Von Vorteil ist dabei, dass das Drehmoment auf einem größeren Radialabstand erzeugbar ist als die elektronische Schaltung angeordnet ist. Somit ist auch die durch die elektronische Schaltung bewirkte Erhöhung des Trägheitsmoments gering. Vorteilhafterweise ist die Bestückung der Leiterplatte automatisiert ausführbar und somit mit geringem Kostenaufwand eine Leistungsstellende Anordnung auf dem drehenden Teil, also Rotor, anordenbar.

Erfindungsgemäß ist der Aktivbereich, die Rotorwicklung und/oder die elektronische Schaltung elektrische Leistung über eine induktive Kopplung zuführbar,
insbesondere wobei der Rotor mit einer Sekundärwicklung verbunden ist, die induktiv an eine mit dem Stator verbundene, insbesondere drehfest verbundene, Primärwicklung gekoppelt ist, insbesondere wobei die Sekundärwicklung axial beabstandet ist von der Leiterplatte,
insbesondere wobei Sekundärwicklung und Primärwicklung als Ringwicklungen ausgeführt sind, insbesondere deren Wickelachse parallel zur Rotorachse ausgerichtet ist,
insbesondere wobei in die Primärwicklung von einer elektrischen Einspeisung ein mittelfrequenter Strom eingeprägt wird,
insbesondere wobei die Einspeisung einen Gyrator aufweist, insbesondere wobei der Gyrator als Vierpol ausgeführt ist und zumindest eine derartige Kapazität und mindestens eine derartige Induktivität aufweist, dass die zugehörige Resonanzfrequenz der eingeprägten Mittelfrequenz im Wesentlichen gleicht,
insbesondere wobei der Sekundärwicklung eine Kapazität in Reihe oder parallel zugeschaltet ist, so dass die zugehörige Resonanzfrequenz im Wesentlichen der Mittelfrequenz entspricht. Von Vorteil ist dabei, dass auch bei Schwankungen der induktiven Kopplung ein im Wesentlichen unverändert hoher Wirkungsgrad bei der induktiven Energieübertragung von der Primärwicklung an die Sekundärwicklung erreichbar ist.

Bei weiteren vorteilhaften Ausgestaltungen ist die Sekundärwicklung des Übertragers ebenfalls als Platine ausgeführt, um die Trägheit des Rotors gering zu halten. Für die somit primärseitigen und/oder statorseitigen Planartransformatorwicklungen wird dann jeweils trotzdem die beschriebene konzentrische Ringwicklung mit magnetischem Rückschluss verwendet.

Bei einer vorteilhaften Ausgestaltung ist dem Aktivbereich, der Rotorwicklung und/oder der elektronischen Schaltung elektrische Leistung über eine Schleifversorgung, insbesondere eine mehrphasige Schleifversorgung, zuführbar. Von Vorteil ist dabei, dass eine wenig aufwendige Energieübertragung einsetzbar ist, die allerdings verschleißbehaftet ist.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert:
In der Figur 1 ist ein schematischer Querschnitt durch einen erfindungsgemäßen Antrieb mit Leiterplatte 1 gezeigt.
In der Figur 2 ist die Leiterplatte 1 in schematischer Draufsicht gezeigt.
In der Figur 3 ist ein erfindungsgemäßes Wickelschema für eine erste Phase U in einer ersten Lage der Multilayer-Leiterplatte dargestellt.
In der Figur 4 ist ein erfindungsgemäßes Wickelschema für die erste Phase U in einer zweiten Lage der Multilayer-Leiterplatte dargestellt.
In der Figur 5 ist eine Schleifversorgung der Rotorwicklung gezeigt, wobei ein dreiphasiger Drehstrom übertragen wird.
In der Figur 6 ist eine einphasige induktive Versorgung der Rotorwicklung gezeigt.
In der Figur 7 ist eine Draufsicht auf den mit Stator gezeigt, bei dem eine Einzelzahnbewicklung ausgeführt ist.
In der Figur 8 ist eine zur Figur 7 zugehörige Seitenansicht gezeigt.

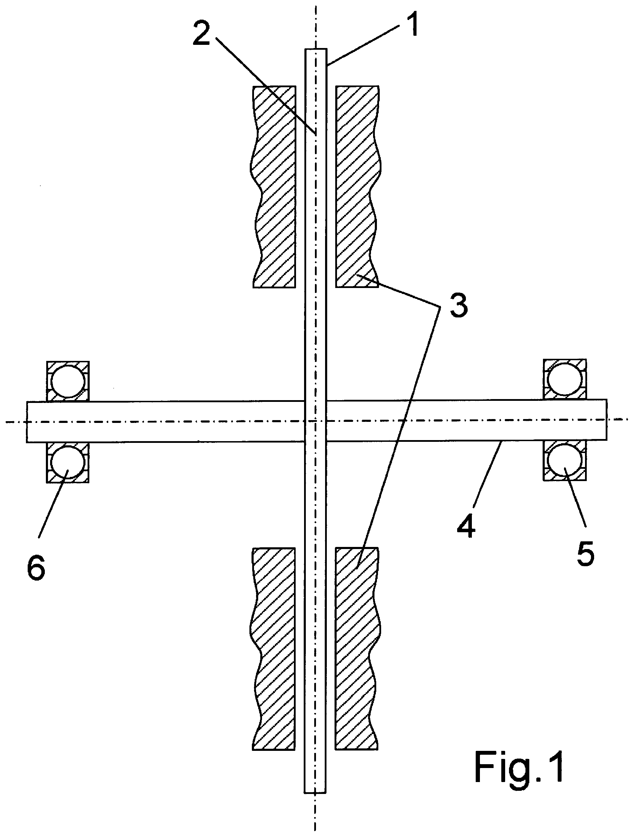

Wie in Figur 1 gezeigt weist der erfindungsgemäße Antrieb eine über Lager 5 und 6 gelagerte Welle 4 auf, wobei die Lager 5 und 6 beispielsweise in einem Gehäuseteil aufgenommen sind.

Eine Leiterplatte 1, insbesondere Multilayer-Leiterplatte, ist mit der Welle 4 drehfest verbunden, wobei die Normalenrichtung der Leiterplattenebene parallel zur Wellenachse der Welle 4 ausgerichtet ist.

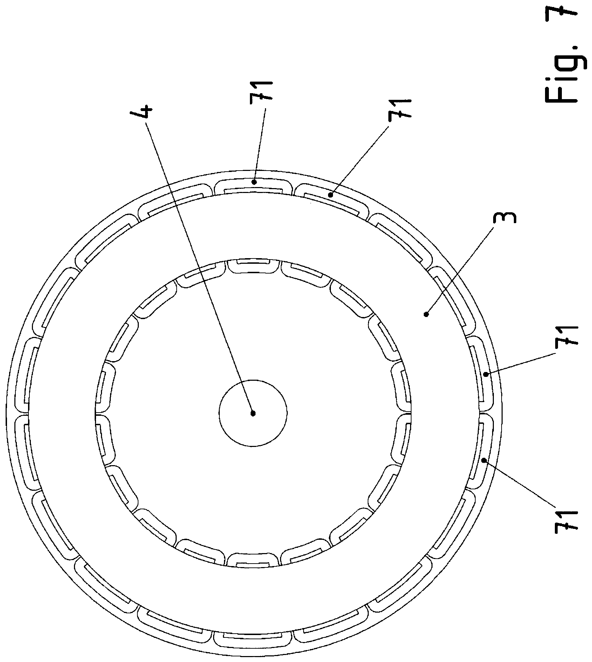

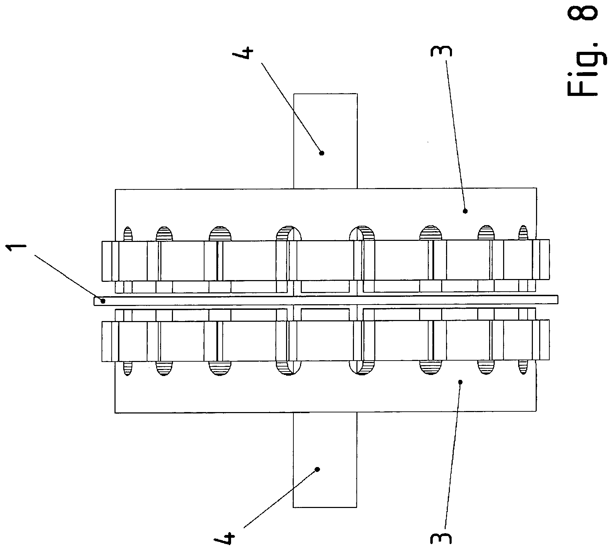

Wie auch in Figur 7 und 8 gezeigt, sind die Statorkerne 3 in Wellenachsrichtung axial vor und hinter der Leiterplatte 1 angeordnet. Die Statorkerne 3 weisen Einzelzahnwicklungen auf, wobei also jeder am jeweiligen Statorkern 3 ausgeformte Zahn eine separate Wicklung aufnimmt.

Jeder Statorkern 3 ist topfartig ausgeformt und weist an seinem Topfrand die in Umfangsrichtung voneinander regelmäßig beabstandeten, axial gerichteten Zahnvorsprünge mit jeweiliger Einzelzahnwicklung auf.

Die Zahnvorsprünge und somit die Einzelzahnwicklungen stehen sich axial gegenüber, so dass das von einer Einzelzahnwicklung erzeugte Magnetfeld größtenteils in einen gegenüberstehenden Zahnvorsprung eingeleitet wird.

Somit ist durch den mittels der Statorkerne 3 gebildeten Stator der Stator einer Axialflussmaschine ausbildbar und ein Drehfeld erzeugbar, das mit einem aktiven Bereich der Leiterplatte 1 zusammenwirkt. Hierzu sind die Einzelzahnwicklungen als Drehfeldwicklung verschaltet und somit entsprechend bestromt.

Der aktive Bereich, also Aktivbereich 22, der Leiterplatte 1 ist ein ringförmiger Teilbereich der Leiterplatte, in welchem die als Leiterbahnen der Leiterplatte ausgeführten Wicklungsleitungen 23 der rotorseitig vorgesehenen Wicklung, radial verlaufen. Der ringförmige Teilbereich ist also durch einen Radialabstandsbereich der Leiterplatte kennzeichenbar. Das von den Zähnen, also Zahnvorsprüngen, der Statorkerne 3 erzeugte Hauptfeld durchdringt den von der Leiterplatte 1 axial überdeckten Bereich. Somit überdecken also die Zähne der Statorkerne 3 denjenigen radialen Bereich, der vom aktiven Bereich der Leiterplatte 1 radial überdeckt wird.

Auf größerem Radialabstand als der aktive Bereich ist der Umlenkbereich 21 angeordnet, insbesondere radial äußerer Umlenkbereich, also Wickelkopfbereich. Auf kleinerem Radialabstand als der aktive Bereich ist der Umlenkbereich 26 angeordnet, insbesondere radial innerer Umlenkbereich, also Wickelkopfbereich.

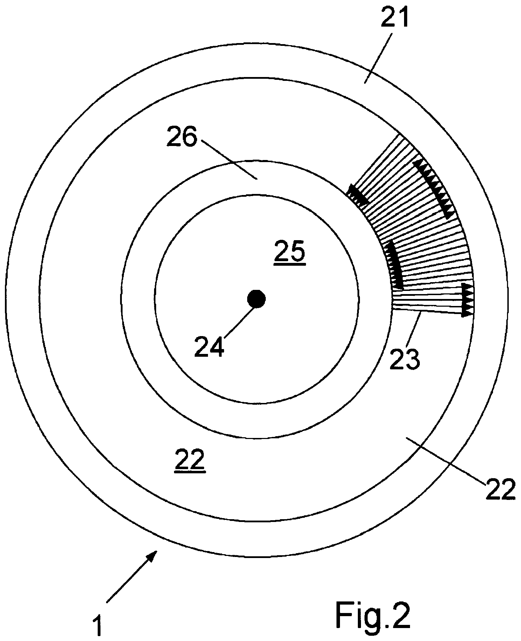

Wie in Figur 2 ersichtlich, schließen sich die von den Umlenkbereichen 21 und 26 überdeckten Radialbereiche radial direkt an den vom Aktivbereich 22 überdeckten Radialbereich an.

Radial innerhalb des Aktivbereichs 22, insbesondere radial innerhalb des vom Umlenkbereich 26 überdeckten Radialbereichs ist ein mit Bauelementen bestückter Bereich 25 der Leiterplatte 1 angeordnet. Somit ist eine elektronische Schaltung auf der mit der Welle 4 im Verbindungsbereich 24 verbundenen Leiterplatte 1 anordenbar.

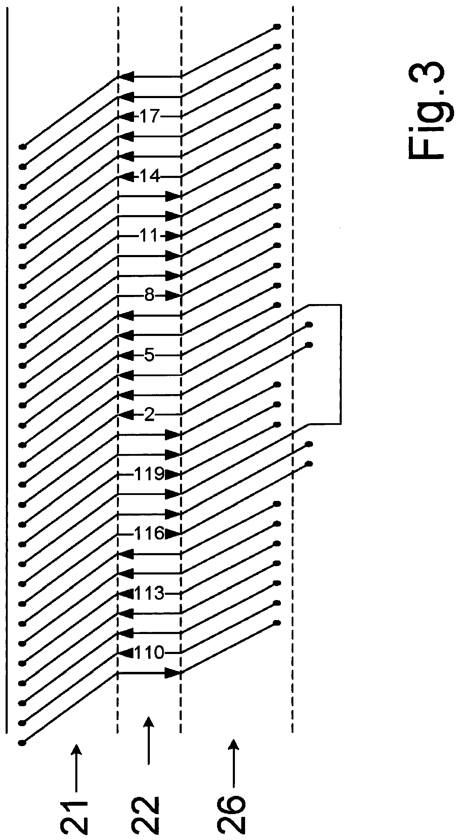

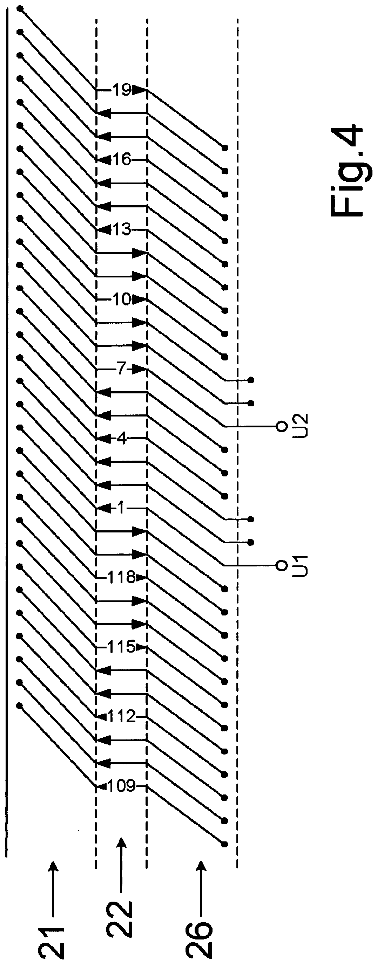

Wie in Figur 3 zusammen mit Figur 4 dargestellt, ist auf der Leiterplatte 1 eine Drehfeldwicklung angeordnet, wobei Figur 3 die Leiterbahnen einer ersten Lage, also eines ersten Layers, und Figur 4 die Leiterbahnen einer zweiten Lage, also eines zweiten Layers, zeigt. Die Endpunkte der Leiterbahnen in Figur 3 und 4 sind als Durchkontaktierungen ausgeführt, so dass die Leiterbahnen verschiedener Lagen, also Layer, elektrisch miteinander verbindbar sind.

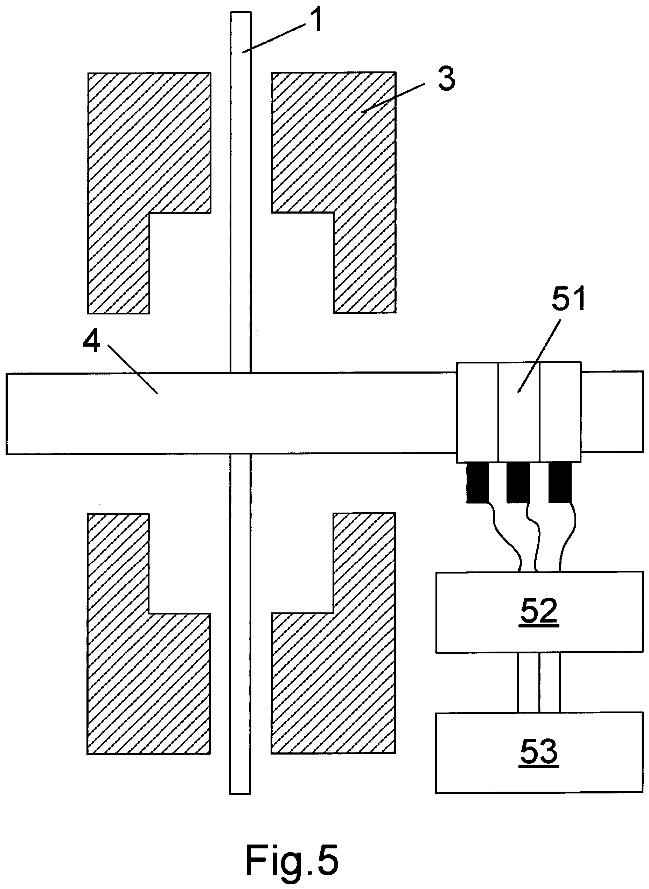

Wie in Figur 5 gezeigt, ist zur Versorgung der auf der Leiterplatte 1 angeordneten Drehfeldwicklung eine Schleifübertragung verwendbar, wobei die Schleifübertragungsmittel 51 für drei Phasen dargestellt sind.

Dabei ist eine Leistungsstufe 52, insbesondere Verstärker, mit Leistungshalbleiterschaltern stationär, also drehfest mit dem Statorkern 3 verbunden, angeordnet, wobei die Leistungsstufe von einer Steuerelektronik 53 mit pulsweitenmodulierten Ansteuersignalen für die Leistungshalbleiterschalter angesteuert wird und der mehrphasige Ausgangsstrom der Leistungsstufe 52 den Schleifübertragungsmitteln 51 zugeführt wird.

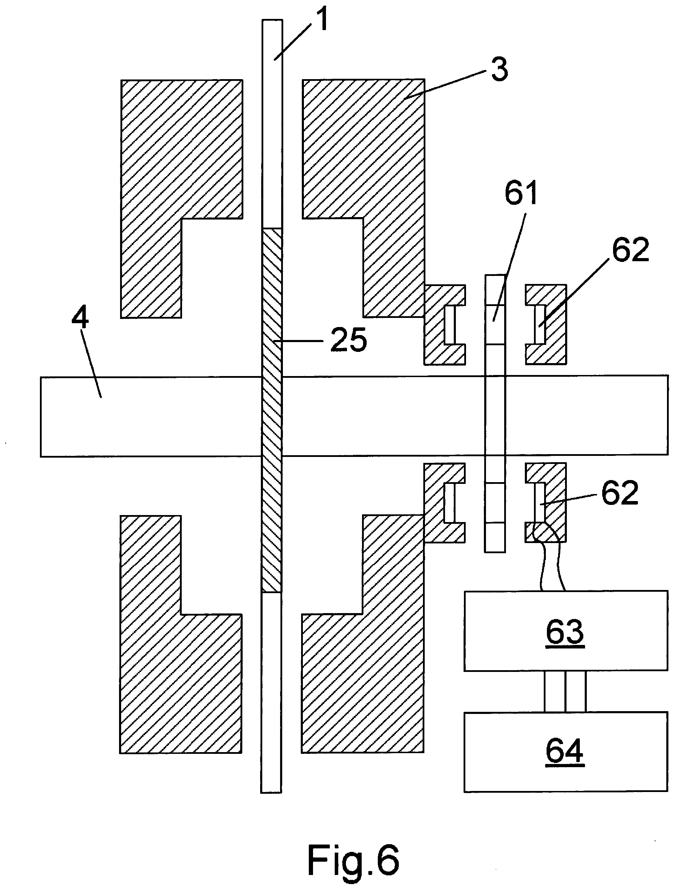

Als alternatives erfindungsgemäßes Ausführungsbeispiel ist statt der Schleifübertragung eine induktive Übertragung in Figur 6 dargestellt.

Hierfür ist eine Sekundärwicklung 61 drehfest mit der Welle 4 verbunden, wobei die auf der Leiterplatte 1 angeordnete elektronische Schaltung elektrisch versorgbar ist über die induktive Kopplung.

Die induktiv mit der Sekundärwicklung 61 gekoppelte Primärwicklung 62 ist drehfest mit einem der Statorkerne 3 verbunden. Die Primärwicklung 62 wird von einem Wechselrichter 63 gespeist, der von einer Steuerelektronik 64 angesteuert wird.

Somit ist in die Primärwicklung 62 ein mittelfrequenter Strom einprägbar, insbesondere mit einer Frequenz zwischen 10 und 1000 kHz, vorzugsweise mit einer Frequenz zwischen 100 und 200 kHz.

Der Sekundärwicklung 61 ist eine Kapazität in Reihe und/oder parallel zuschaltbar, so dass die zugehörige Resonanzfrequenz im Wesentlichen der eingeprägten Mittelfrequenz entspricht. Auf diese Weise sind trotz Schwankungen der induktiven Kopplungsstärke möglichst gleichmäßig hohe Wirkungsgrade erreichbar.

Ein Leistungsstellglied ist auf der Leiterplatte 1 im Bereich 25 vorgesehen. Somit ist der elektrische Leistungsfluss von der Sekundärwicklung 61 über das Leistungsstellglied hin zum aktiven Bereich 22 der Leiterplatte 1 steuerbar. Im Bereich 25 ist außerdem eine Steuerelektronik angeordnet, welche Ansteuersignale für das Leistungsstellglied aufweist. Das Leistungsstellglied ist als Stromrichter ausgeführt. Wegen der räumlichen Nähe zum Aktivbereich 22 ist das Leistungsstellglied sehr niederinduktiv angebunden an den Aktivbereich 22. Die Induktivität der Zuleitung der elektrischen Energie vom Leistungsstellglied zum Aktivbereich 22 ist kleiner als die Induktivität des Aktivbereichs 22 samt Umlenkbereichen 21 und 26, also der Rotorwicklung. Insbesondere ist sie geringer als ein Zehntel der Induktivität der Rotorwicklung.

Des Weiteren werden Strom, Temperatur und/oder Spannung der Rotorwicklung erfasst und der Steuerelektronik im Bereich 25 der Leiterplatte 1 zugeführt.

Wie in Figur 7 und 8 gezeigt, weist jeder der Statorkerne 3 jeweilige Einzelzahnwicklungen 71 auf. Diese sind in Umfangsrichtung gleichmäßig voneinander beabstandet und jeweils auf dem selben Radialabstand angeordnet. Jede Einzelzahnwicklung 71 ist auf einen zahnartigen Vorsprung des Statorkerns 3 aufgesteckt, der somit das Hauptfeld der jeweiligen Einzelzahnwicklung 71 bündelt und axial herausführt zu dem jeweils axial gegenüberstehenden zahnartigen Vorsprung des anderen Statorkerns 3.

Die Zahnspulen sind also als Formspulen auf den jeweiligen zahnartigen Vorsprung aufgesteckt. Die Statorkerne 3 sind als Formteile ausgeführt, insbesondere aus Ferrit oder einem ferromagnetischen Werkstoff ausgeführt. Die magnetischen Eigenschaften der Statorkerne sind isotrop. Als Werkstoff der Statorkerne 3 werden bevorzugt SMC-Magnetkreismaterialien eingesetzt, also Soft-Magnetik-Composite-Materialien.

Bei Dauermagneterregung am Stator wird alternativ Stahl eingesetzt.

Da somit statorseitig eine Drehfeldwicklung vorgesehen ist und rotorseitig ebenfalls eine Drehfeldwicklung im Aktivbereich 22 ausgeführt ist, liegt somit eine zweiseitig eingespeiste Drehfeldmaschine mit eisenlosem Rotor vor. Der Drehzahlstellbereich ist verglichen mit einer einseitig eingespeisten Drehfeldmaschine doppelt so groß.

Die Leiterplatte 1 weist einen kreisförmigen Rand auf. Somit ist sie als Scheibe ausgeführt, insbesondere also Lochscheibe, wobei die Welle 4 in dem mittig angeordneten Loch durchgeführt ist.

Die Leiterplatte 1 weist ein elektrisch isolierendes Trägermaterial auf, wobei hierzu vorzugsweise Epoxidharz verwendet wird. Jede der Lagen, also Layer, weist metallische Leiterbahnen auf, wobei hierzu vorzugsweise Kupfer oder eine Kupfer-haltige Legierung verwendet wird.

Somit ist der Rotor eisenlos ausgeführt, also ohne Blechpaket. Das Trägermaterial weist eine im Wesentlichen mit Luft vergleichbare spezifische magnetische Permeabilität auf. Da das Trägermaterial nur eine geringe Masse aufweist, weist der Rotor insgesamt ein sehr geringes Trägheitsmoment auf.

Die Durchkontaktierungen sind elektrische Verbindungen von in Normalenrichtung der Leiterplatte voneinander beabstandeten Endpunkten der Leiterbahnen. Vorzugsweise wird hierzu ein Bohrloch in die Leiterplatte eingebracht, dessen Wandung metallisiert wird, also mit einer Metallschicht überzogen wird.

Bei weiteren erfindungsgemäßen Ausführungsbeispielen ist als Leiterbahn ein jeweiliges Kupferprofil verwendet, welches in einem elektrisch isolierenden Basismaterial eingebettet ist. Vorzugsweise ist das Kupferprofil aus einem Stanz-Biegeteil oder aus einem Stranggussprofil als Stanz-Biegeteil und das Basismaterial ist Epoxidharz. Das Kupferprofil weist einen dicken Querschnitt auf, so dass eine hohe Stromtragfähigkeit erreichbar ist.

### Bezugszeichenliste

1 Leiterplatte, insbesondere Multilayer-Leiterplatte
2 Mittenebene
3 Statorkern
4 Welle
5 Lager
6 Lager
21 Umlenkbereich, insbesondere radial äußerer Umlenkbereich, Wickelkopfbereich
22 Aktivbereich
23 Wicklungsleitung
24 Verbindungsbereich zur Welle 4
25 mit Bauelementen bestückter Bereich der Leiterplatte
26 Umlenkbereich, insbesondere radial innerer Umlenkbereich, Wickelkopfbereich
51 Schleifübertragungsmittel
52 Leistungsstufe, insbesondere Verstärker, mit Leistungshalbleiterschaltern
53 Steuerelektronik mit pulsweitenmodulierten Ansteuersignalen für die Leistungshalbleiterschalter
61 Sekundärwicklung
62 Primärwicklung
63 Wechselrichter
64 Steuerelektronik
71 Einzelzahnwicklung

## Patentansprüche

1. Elektromotor,
aufweisend einen Stator und einen relativ zum Stator drehbar angeordneten Rotor,
wobei der Rotor einen Aktivbereich aufweist, zur Drehmomenterzeugung bei Wechselwirkung des Aktivbereichs mit dem vom Stator erzeugten Magnetfeld,
wobei der Aktivbereich elektrisch bestrombare Leiterbahnen einer Multilayer-Leiterplatte (1), also einer mehrlagigen Leiterplatte (1), aufweist,
wobei eine Rotorwicklung, die als Leiterbahnen einer Leiterplatte ausgeführt ist, auf der Leiterplatte (1) ausgebildet ist,
**wobei die Leiterplatte (1) drehfest mit dem Rotor verbunden ist,**
**dadurch gekennzeichnet, dass**
der Stator zwei sich gegenüberliegende Statorkerne (3) aufweist, wobei die Leiterplatte (1) axial zwischen den beiden Statorkernen (3) angeordnet ist,
und dass
- **dem Aktivbereich,**
- der **Rotorwicklung und/oder**
- **einer elektronischen Schaltung, welche elektronische Bauteile aufweist, die auf der Leiterplatte (1) bestückt sind,**
**elektrische Leistung über eine induktive Kopplung zuführbar** ist, die aus einer Primärwicklung (62) und einer Sekundärwicklung (61) besteht,
**wobei der Rotor mit** der **Sekundärwicklung (61) verbunden ist, die induktiv an** die **mit dem Stator drehfest verbundene Primärwicklung (62) gekoppelt ist,**
**wobei die Sekundärwicklung (61) axial beabstandet ist von der axial zwischen den beiden Statorkernen (3) angeordneten Leiterplatte (1),**
**wobei Sekundärwicklung (61) und Primärwicklung (62) als Ringwicklungen ausgeführt sind, deren Wickelachse parallel zur Rotorachse ausgerichtet ist.**

2. Elektromotor nach Anspruch 1,
**dadurch gekennzeichnet, dass**
**die Leiterplatte (1) drehfest mit einem Wellenabschnitt des Rotors verbunden ist,**
**wobei der Rotor über Lager (5, 6) gelagert ist, die in einem Teil, also Gehäuseteil, aufgenommen sind, welches fest mit den Statorkernen (3) verbunden sind.**

3. Elektromotor nach mindestens einem der vorangegangenen Ansprüche,
**dadurch gekennzeichnet, dass**
die Leiterbahnen der Multilayer-Leiterplatte (1) eine Drehfeldwicklung bilden.

4. Elektromotor nach mindestens einem der vorangegangenen Ansprüche,
**dadurch gekennzeichnet, dass**
der Stator Dauermagnete aufweist, deren Magnetisierungsrichtung jeweils parallel zur Drehachse des Rotors ausgerichtet sind.

5. Elektromotor nach mindestens einem der vorangegangenen Ansprüche,
**dadurch gekennzeichnet, dass**
der Stator eine Statorwicklung aufweist zur Erzeugung eines Drehfeldes, wobei die Statorwicklung eine Drehfeldwicklung ist.

6. Elektromotor nach mindestens einem der vorangegangenen Ansprüche,
**dadurch gekennzeichnet, dass**
die im Aktivbereich angeordneten Leiterbahnen radial verlaufen und/oder sich radial erstrecken.

7. Elektromotor nach mindestens einem der vorangegangenen Ansprüche,
**dadurch gekennzeichnet, dass**
sich an den Aktivbereich radial innen und radial außen jeweils ein Umlenkbereich (21, 26) anschließt.

8. **Elektromotor nach Anspruch 7,**
**dadurch gekennzeichnet, dass**
**die Leiterbahnen einer jeweiligen Lage in einem Umlenkbereich (21, 26) jeweils enden in einer axial gerichteten Durchkontaktierung, also axial gerichteten durchkontaktierten Bohrung der Leiterplatte (1) zur elektrischen Verbindung von Leiterbahnen verschiedener Lagen.**

9. Elektromotor nach mindestens einem der vorangegangenen Ansprüche,
**dadurch gekennzeichnet, dass**
am Statorkern (3) zahnartige Vorsprünge ausgebildet sind, die in Umfangsrichtung voneinander regelmäßig beabstandet sind, und auf gleichem Radialabstand angeordnet sind,
wobei die Statorwicklung Einzelwicklungen aufweist,
wobei jede Einzelwicklung auf einem jeweiligen zahnartigen Vorsprung aufgesteckt angeordnet ist,
wobei das aus den Einzelwicklungen erzeugte Magnetfeld im Wesentlichen axial gerichtet ist,
wobei das aus den Einzelwicklungen erzeugte Hauptfeld des Magnetfelds axial gerichtet ist.

10. Elektromotor nach mindestens einem der vorangegangenen Ansprüche,
**dadurch gekennzeichnet, dass**
der jeweilige Statorkern (3) topfartig ausgeformt ist, wobei die zahnartigen Vorsprünge den Topfrand bilden, wobei der Statorkern (3) jeweils aus SMC Material gefertigt ist.

11. Elektromotor nach mindestens einem der vorangegangenen Ansprüche,
**dadurch gekennzeichnet, dass**
die Leiterplatte (1) einen kreisförmigen radialen Außenrand aufweist.

12. Elektromotor nach mindestens einem der vorangegangenen Ansprüche,
**dadurch gekennzeichnet, dass**
die Leiterbahnen aus Kupfer oder einer Kupferhaltigem Werkstoff sind und/oder die Leiterbahnen der inneren Lagen der Leiterplatte (1) in einem elektrisch isolierenden Trägermaterial eingebettet sind, wobei das Trägermaterial zumindest Epoxidharz aufweist.

13. Elektromotor nach mindestens einem der vorangegangenen Ansprüche,
**dadurch gekennzeichnet, dass**
die Leiterplatte (1) mit elektronischen Bauteilen einer elektronischen Schaltung bestückt ist auf kleinerem Radialabstand als der Aktivbereich und/oder als die Umlenkbereiche (21, 26) angeordnet sind.

14. Elektromotor nach mindestens einem der vorangegangenen Ansprüche,
**dadurch gekennzeichnet, dass**
**in die Primärwicklung (62) von einer elektrischen Einspeisung ein mittelfrequenter Strom eingeprägt wird,**
wobei die Einspeisung einen Gyrator aufweist, wobei der Gyrator als Vierpol ausgeführt ist und zumindest eine derartige Kapazität und mindestens eine derartige Induktivität aufweist, dass die zugehörige Resonanzfrequenz der eingeprägten Mittelfrequenz im Wesentlichen gleicht,
wobei der Sekundärwicklung (61) eine Kapazität in Reihe oder parallel zugeschaltet ist, so dass die zugehörige Resonanzfrequenz im Wesentlichen der Mittelfrequenz entspricht.

## Claims

1. An electric motor,
having a stator and a rotor arranged rotatably relative to the stator,
wherein the rotor has an active region, for generating torque upon interaction of the active region with the magnetic field generated by the stator,
wherein the active region has electrically energisable printed conductors of a multilayer printed circuit board (1), i.e. a multiple-layer printed circuit board (1),
wherein a rotor winding which is embodied as printed conductors of a printed circuit board is formed on the printed circuit board (1),
wherein the printed circuit board (1) is connected in rotation-resistant manner to the rotor,
**characterised in that**
the stator has two opposing stator cores (3), the printed circuit board (1) being arranged axially between the two stator cores (3),
and **in that** electric power can be supplied to
- the active region,
- the rotor winding and/or
- an electronic circuit which has electronic components which are fitted on the printed circuit board (1),
via an inductive coupling which consists of a primary winding (62) and a secondary winding (61),
wherein the rotor is connected to the secondary winding (61), which is coupled inductively to the primary winding (62), which is connected in rotation-resistant manner to the stator,
wherein the secondary winding (61) is axially spaced apart from the printed circuit board (1) which is arranged axially between the two stator cores (3),
wherein the secondary winding (61) and primary winding (62) are embodied as ring windings, the winding axes of which are oriented parallel to the rotor axis.

2. An electric motor according to Claim 1,
**characterised in that**
the printed circuit board (1) is connected in rotation-resistant manner to a shaft portion of the rotor,
wherein the rotor is mounted by way of bearings (5, 6) which are accommodated in a part, i.e. housing part, which are connected fixedly to the stator cores (3).

3. An electric motor according to at least one of the preceding claims,
**characterised in that**
the printed conductors of the multilayer printed circuit board (1) form a rotary field winding.

4. An electric motor according to at least one of the preceding claims,
**characterised in that**
the stator has permanent magnets, the direction of magnetisation of which are oriented in each case parallel to the axis of rotation.

5. An electric motor according to at least one of the preceding claims,
**characterised in that**
the stator has a stator winding for generating a rotary field, the stator winding being a rotary field winding.

6. An electric motor according to at least one of the preceding claims,
**characterised in that**
the printed conductors arranged in the active region run radially and/or extend radially.

7. An electric motor according to at least one of the preceding claims,
**characterised in that**
in each case a deflection region (21, 26) adjoins the active region radially internally and radially externally.

8. An electric motor according to Claim 7,
**characterised in that**
the printed conductors of a respective layer in a deflection region (21, 26) end in each case in an axially directed plated-through hole, i.e. axially directed plated bore, of the printed circuit board (1) for the electrical connection of printed conductors of different layers.

9. An electric motor according to at least one of the preceding claims,
**characterised in that**
tooth-like projections which are regularly spaced apart from each other in the peripheral direction, and are arranged at the same radial distance are formed on the stator core (3),
wherein the stator winding has individual windings,
wherein each individual winding is arranged placed on a respective tooth-like projection,
wherein the magnetic field generated from the individual windings is directed substantially axially,
wherein the main field of the magnetic field generated from the individual windings is directed axially.

10. An electric motor according to at least one of the preceding claims,
**characterised in that**
the respective stator core (3) is formed in a pot-shape, the tooth-like projections forming the pot edge,
the stator core (3) being manufactured in each case from SMC material.

11. An electric motor according to at least one of the preceding claims,
**characterised in that**
the printed circuit board (1) has a circular radial outer edge.

12. An electric motor according to at least one of the preceding claims,
**characterised in that**
the printed conductors are made of copper or a copper-containing material and/or the printed conductors of the inner layers of the printed circuit board (1) are embedded in an electrically insulating support material, the support material comprising at least epoxy resin.

13. An electric motor according to at least one of the preceding claims,
**characterised in that**
the printed circuit board (1) is populated with electronic components of an electronic circuit, at a smaller radial distance than the active region and/or than the deflection regions (21, 26).

14. An electric motor according to at least one of the preceding claims,
**characterised in that**
a medium-frequency current is injected into the primary winding (62) from an electrical infeed,
the infeed having a gyrator, the gyrator being embodied as a quadripole and at least having such a capacitor and at least such an inductor that the associated resonant frequency is substantially identical to the injected medium frequency,
a capacitor being connected in series or parallel with the secondary winding (61) so that the associated resonant frequency corresponds substantially to the medium frequency.

## Revendications

1. Moteur électrique,
présentant un stator et un rotor disposé à rotation par rapport au stator,
sachant que le rotor présente une région active servant à générer un couple lors d'une interaction de la région active avec le champ magnétique généré par le stator,
sachant que la région active présente des pistes conductrices, pouvant être parcourues par un courant électrique, d'une carte imprimée multicouche (1), donc d'une carte imprimée (1) à plusieurs couches,
sachant qu'un enroulement rotorique, qui est réalisé sous forme de pistes conductrices d'une carte imprimée, est formé sur la carte imprimée (1),
sachant que la carte imprimée (1) est liée en rotation au rotor,
**caractérisé en ce que** le stator présente deux noyaux de stator (3) se faisant face, sachant que la carte imprimée (1) est disposée axialement entre les deux noyaux de stator (3),
et **en ce que** de l'énergie électrique peut, par l'intermédiaire d'un couplage inductif qui est constitué d'un enroulement primaire (62) et d'un enroulement secondaire (61), être apportée
- à la région active,
- à l'enroulement rotorique et/ou
- à un montage électronique qui présente des composants électroniques qui sont montés sur la carte imprimée (1),
sachant que le rotor est relié à l'enroulement secondaire (61), qui est couplé par induction à l'enroulement primaire (62) lié en rotation au stator,
sachant que l'enroulement secondaire (61) est axialement distant de la carte imprimée (1) disposée axialement entre les deux noyaux de stator (3),
sachant que l'enroulement secondaire (61) et l'enroulement primaire (62) sont réalisés sous la forme d'enroulements annulaires dont l'axe d'enroulement est orienté parallèlement à l'axe du rotor.

2. Moteur électrique selon la revendication 1, **caractérisé en ce que** la carte imprimée (1) est liée en rotation à une partie d'arbre du rotor,
sachant que le rotor est monté au moyen de paliers (5, 6) qui sont reçus dans un élément, donc un élément de boîtier, qui est fixement relié aux noyaux de stator (3).

3. Moteur électrique selon au moins une des revendications précédentes,
**caractérisé en ce que** les pistes conductrices de la carte imprimée multicouche (1) forment un enroulement à champ rotatif.

4. Moteur électrique selon au moins une des revendications précédentes,
**caractérisé en ce que** le stator présente des aimants permanents dont les directions de magnétisation sont respectivement orientées parallèlement à l'axe de rotation du rotor.

5. Moteur électrique selon au moins une des revendications précédentes,
**caractérisé en ce que** le stator présente un enroulement statorique destiné à produire un champ rotatif, sachant que l'enroulement statorique est un enroulement à champ rotatif.

6. Moteur électrique selon au moins une des revendications précédentes,
**caractérisé en ce que** les pistes conductrices disposées dans la région active s'étendent radialement et/ou se développent radialement.

7. Moteur électrique selon au moins une des revendications précédentes,
**caractérisé en ce qu'**une région de déviation (21, 26) se raccorde respectivement radialement à l'intérieur et radialement à l'extérieur à la région active.

8. Moteur électrique selon la revendication 7, **caractérisé en ce que** les pistes conductrices d'une couche respective dans une région de déviation (21, 26) se terminent respectivement dans un via orienté axialement, donc un perçage métallisé orienté axialement de la carte imprimée (1), destiné à la liaison électrique de pistes conductrices de différentes couches.

9. Moteur électrique selon au moins une des revendications précédentes,
**caractérisé en ce que** des saillies du genre dents sont formées sur le noyau de stator (3), saillies qui sont régulièrement distantes les unes des autres en direction périphérique et qui sont disposées à la même distance radiale,
sachant que l'enroulement statorique présente des enroulements individuels,
sachant que chaque enroulement individuel est disposé en étant emmanché sur une saillie du genre dent respective,
sachant que le champ magnétique produit à partir des enroulements individuels est orienté essentiellement axialement,
sachant que le champ principal, produit à partir des enroulements individuels, du champ magnétique est orienté axialement.

10. Moteur électrique selon au moins une des revendications précédentes,
**caractérisé en ce que** le noyau de stator respectif (3) est réalisé en forme de pot, sachant que les saillies du genre dents forment le bord du pot,
sachant que le noyau de stator (3) est respectivement fabriqué en matériau SMC.

11. Moteur électrique selon au moins une des revendications précédentes, **caractérisé en ce que** la carte imprimée (1) présente un bord extérieur radial circulaire.

12. Moteur électrique selon au moins une des revendications précédentes,
**caractérisé en ce que** les pistes conductrices sont en cuivre ou en un matériau contenant du cuivre et/ou les pistes conductrices des couches intérieures de la carte imprimée (1) sont incorporées dans un matériau support électriquement isolant, sachant que le matériau support présente au moins de la résine époxy.

13. Moteur électrique selon au moins une des revendications précédentes,
**caractérisé en ce que** la carte imprimée (1) est équipée de composants électroniques d'un montage électronique qui sont disposés à une plus petite distance radiale que la région active et/ou que les régions de déviation (21, 26).

14. Moteur électrique selon au moins une des revendications précédentes,
**caractérisé en ce qu'**un courant à moyenne fréquence est injecté dans l'enroulement primaire (62) par une alimentation électrique,
sachant que l'alimentation présente un gyrateur, sachant que le gyrateur est réalisé sous forme de quadripôle et présente au moins une capacitance telle et au moins une inductance telle que la fréquence de résonance associée est sensiblement égale à la moyenne fréquence injectée,
sachant qu'une capacitance est mise en circuit en série ou en parallèle avec l'enroulement secondaire (61), de sorte que la fréquence de résonance associée correspond sensiblement à la moyenne fréquence.
